# EUROPEAN PATENT APPLICATION

(11) **EP 4 254 626 A1**
(43) Date of publication of application: **04.10.2023**
(21) Application number: 22791868.7
(22) Date of filing: 28.02.2022
(51) Int. Cl.: H01M 50/211, H01M 50/24, H01M 50/271

(54) **BATTERY PACK AND DEVICE INCLUDING SAME**

(30) Priority: 20.04.2021 KR 20210051382
(71) Applicant: LG Energy Solution, Ltd., Seoul 07335 (KR)
(72) Inventor: SHIN, Juhwan, Daejeon 34122 (KR); YANG, Changhyeon, Daejeon 34122 (KR); KIM, Haejin, Daejeon 34122 (KR); LEE, Hyoungsuk, Daejeon 34122 (KR)
(74) Representative: Plasseraud IP
(86) International application number: PCT/KR2022/002884
(87) International publication number: WO 2022/225168

(57) **Abstract**

A battery pack according to an embodiment of the present disclosure includes battery modules including a plurality of battery cells; and a pack frame for housing the battery modules . Inside the pack frame, the battery modules are arranged in a row along the width direction to form a battery module group, and inside the battery module, the battery cells are stacked along the width direction to form a battery cell stack. A cover member for covering the entire upper surface of the battery module group is located between the upper surface of the battery module group and the pack frame.

## Description

### [TECHNICAL FIELD]

### Cross Citation with Related Application(s)

This application claims the benefit of Korean Patent Application No. 10-2021-0051382 filed on April 20, 2020 with the Korean Intellectual Property Office, the content of which is incorporated herein by reference in its entirety.

The present disclosure relates to a battery pack and a device including the same, and more particularly, to a battery pack having improved safety at the occurrence of flames and a device including the same.

### [BACKGROUND ART]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, there is a growing need for development of the secondary battery.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a positive electrode active material and a negative electrode active material, respectively. The lithium secondary battery includes an electrode assembly in which a positive electrode plate and a negative electrode plate, each being coated with the positive electrode active material and the negative electrode active material, are arranged with a separator being interposed between them, and a battery case which seals and houses the electrode assembly together with an electrolyte solution.

Generally, the lithium secondary battery may be classified based on the shape of the exterior material into a can type secondary battery in which the electrode assembly is built into a metal can, and a pouch-type secondary battery in which the electrode assembly is built into a pouch of an aluminum laminate sheet.

In the case of a secondary battery used for small-sized devices, two to three battery cells are arranged, but in the case of a secondary battery used for a middle or large-sized device such as an automobile, a battery module in which a large number of battery cells are electrically connected is used. In such a battery module, a large number of battery cells are connected to each other in series or parallel to form a cell assembly, thereby improving capacity and output. In addition, one or more battery modules can be mounted together with various control and protection systems such as a BMS (battery management system) and a cooling system to form a battery pack.

In a battery pack configured to gather a plurality of battery modules, heat generated from the large number of battery cells can be added up in a narrow space, so that the temperature can rise more quickly and excessively. In other words, battery modules in which a large number of battery cells are stacked and a battery pack equipped with these battery modules can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since a plurality of battery modules are concentratedly arranged to increase the mileage of the vehicle, a thermal runaway phenomenon generated in one battery module can easily propagate to an adjacent battery module, which may eventually lead to ignition or explosion of the battery pack itself.

Therefore, there is a need to design a model that does not lead to fire or explosion of the battery pack itself, even if a thermal runaway phenomenon occurs in any one of the battery cells.

### [DETAILED DESCRIPTION OF THE INVENTION]

### [Technical Problem]

It is an object of the present disclosure to provide a battery pack that can prevent a thermal runaway phenomenon from leading to fire or explosion even if the thermal runaway phenomenon occurs in any one of the battery cells, and a device including the same.

However, the problem to be solved by the embodiments of the present disclosure is not limited to the above-described problems, and can be variously expanded within the scope of the technical idea included in the present disclosure.

### [Technical Solution]

A battery pack according to one embodiment of the present disclosure includes battery modules including a plurality of battery cells; and a pack frame for housing the battery modules. Inside the pack frame, the battery modules are arranged in a row along the width direction to form a battery module group, and inside the battery module, the battery cells are stacked along the width direction to form a battery cell stack. A cover member for covering the entire upper surface of the battery module group is located between the upper surface of the battery module group and the pack frame.

The battery cells may be stacked along the width direction while one surface of the cell body of the battery cell stands upright so as to be perpendicular to one surface of the bottom part of the pack frame.

The battery cell may be a pouch-type battery cell.

The battery module group may include a first battery module group and a second battery module group that are separated from each other along the width direction.

The cover member may include a first cover member that covers the upper surface of the first battery module group and a second cover member that covers the upper surface of the second battery module group.

The first cover member may be located so as to correspond to the entire upper surface of the first battery module group.

The second cover member may be located so as to correspond to the entire upper surface of the second battery module group.

The pack frame may include a partition wall part located between the first battery module group and the second battery module group.

The battery pack may further include a connection member that connects adjacent battery modules among the battery modules.

### [Advantageous Effects]

According to embodiments of the present disclosure, even if a thermal runaway phenomenon occurs in any one of the battery cells, it is designed so that a thermal propagation is sequentially performed, thereby capable of preventing fire or explosion in a battery pack unit.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view which shows a battery module and a connection member according to an embodiment of the present disclosure;
Fig. 2 is an exploded perspective view of the battery module of Fig. 1;
Fig. 3 is a perspective view of a battery cell included in the battery module of Fig. 2;
Fig. 4 is a cross-sectional view of a battery pack according to an embodiment of the present disclosure;
Fig. 5 is a cross-sectional view which schematically illustrates a state in which a thermal runaway phenomenon occurs in one battery cell in the battery pack of Fig. 4;
Fig. 6 is a cross-sectional view of a battery pack according to another embodiment of the present disclosure;
Fig. 7 is a cross-sectional view which schematically illustrates a state in which a thermal runaway phenomenon occurs in any one of the battery cells in the battery pack of Fig. 6; and
Fig. 8 is a cross-sectional view of a battery pack including a partition wall part according to a modified embodiment of the present disclosure;

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

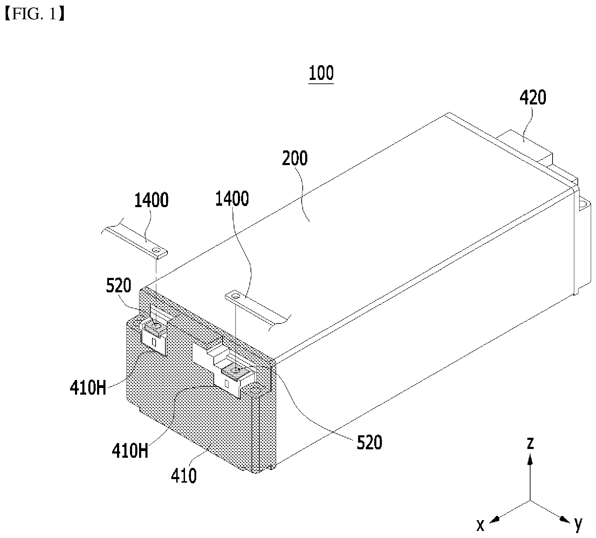

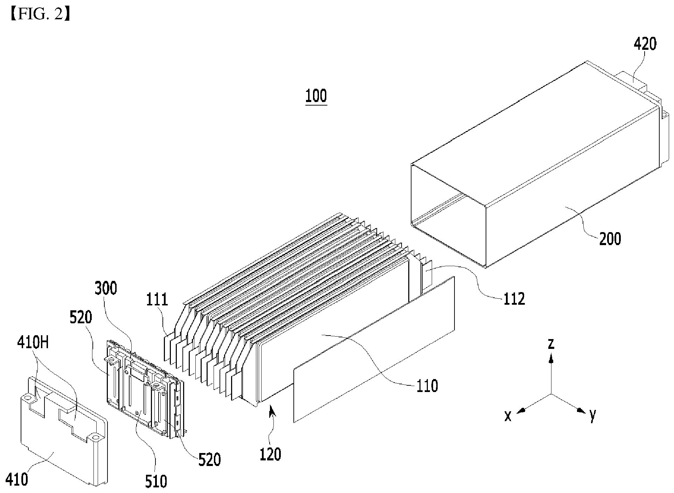

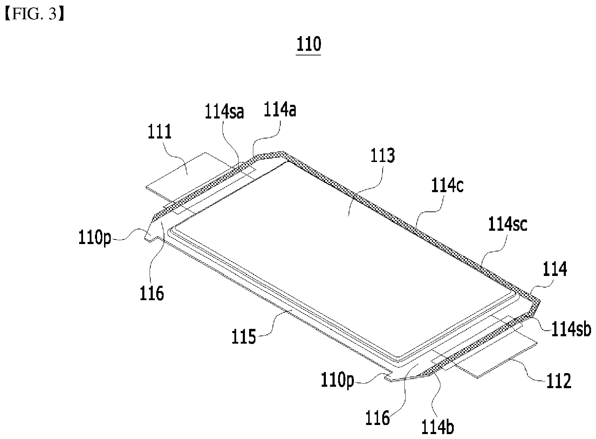

Fig. 1 is a perspective view showing a battery module and a connection member according to an embodiment of the present disclosure. Fig. 2 is an exploded perspective view of the battery module of Fig. 1. Fig. 3 is a perspective view of a battery cell included in the battery module of Fig. 2.

Referring to Figs. 1 to 3, the battery module 100 according to an embodiment of the present disclosure includes a plurality of battery cells 110. The battery cell 110 is preferably a pouch-type battery cell, and can be formed in a rectangular sheet-like structure. For example, the battery cell 110 according to the present embodiment has a structure in which two electrode leads 111 and 112 face each other and protrude from one end part and the other end part, respectively.

In particular, referring to Fig. 3, the battery cell 110 according to the present embodiment has a structure in which the two electrode leads 111 and 112 face each other and protrude from one end part 114a and the other end part 114b of the cell body 113, respectively. More specifically, the electrode leads 111 and 112 are connected to an electrode assembly (not shown) and protrude from the electrode assembly (not shown) to the outside of the battery cell 110.

Meanwhile, the battery cell 110 can be produced by joining both end parts 114a and 114b of a cell case 114 and one side part 114c connecting them in a state in which an electrode assembly (not shown) is housed in a cell case 114. In other words, the battery cell 110 according to the present embodiment has a total of three sealing parts 114sa, 114sb and 114sc, the sealing parts 114sa, 114sb and 114sc have a structure that is sealed by a method such as heat-sealing, and the remaining other side part may be composed of a connection part 115. The cell case 114 may be composed of a laminate sheet including a resin layer and a metal layer.

In addition, the connection part 115 may extend long along one edge of the battery cell 110, and a protrusion 110p of the battery cell 110 called a bat-ear can be formed at an end part of the connection part 115. However, the protrusion 110p is an exemplary structure, and the battery cell 110 according to another embodiment of the present disclosure may have a shape in which the protrusion is not formed and the connection part 115 extends in a straight line.

In Fig. 3, only the battery cell 110 having a structure in which the electrode leads 111 and 112 protrude in both directions has been described, but in another embodiment of the present disclosure, it goes without saying that a unidirectional pouch-type battery cell in which electrode leads protrude together in one direction is also possible.

The battery cell 110 may be configured by a plurality of numbers, and the plurality of battery cells 110 may be stacked so as to be electrically connected to each other, thereby forming a battery cell stack 120. Particularly, as shown in Fig. 2, the plurality of battery cells 110 can be stacked along a direction parallel to the y-axis. Thereby, one electrode lead 111 of the battery cells 110 can be protruded toward the x-axis direction, and another electrode lead 112 can be protruded toward the -x-axis direction.

The battery cell stack 120 may be housed in the module frame 200. The module frame 200 may be a metal frame having a shape of which both surfaces are opened. More specifically, the module frame 200 may be opened in both directions in which the electrode leads 111 and 112 protrude with reference to the battery cell stack 120. However, the module frame 200 shown in Fig. 2 is an exemplary structure, and the shape thereof is not particularly limited as long as it can house the battery cell stack 120. For example, a shape in which an upper cover is joined to a U-shaped frame with an opened upper part, a shape in which a U-shaped frame and an inverted U-shaped frame are coupled with each other, or the like are possible.

End plates 410 and 420 may be located on the opened both surfaces of the module frame 200. The two end plates 410 and 420 are referred to as a first end plate 410 and a second end plate 420, respectively. The end plates 410 and 420 may cover the opened both surfaces of the module frame 200, respectively. The battery cell stack 120 is housed in the space formed by the module frame 200 and the end plates 410 and 420, thereby capable of physically protecting the battery cell stack 120. For this purpose, the module frame 200 and the end plates 410 and 420 may include a metal material having a predetermined strength such as aluminum or a plastic material. Meanwhile, the module frame 200 and the end plates 410 and 420 can be joined by a method such as welding in a state in which the corresponding corner portions are in contact with each other. However, this is an exemplary method, and bolt fastening, hook fastening, or the like may be applied as the mechanical coupling form.

Meanwhile, the battery module 100 according to the present embodiment may further include a busbar frame 300 on which a busbar 510 and a terminal busbar 520 are mounted.

The busbar 510 and the terminal busbar 520 may be joined to the electrode leads 111 and 112 of the battery cells 110 in order to electrically connect the plurality of battery cells 110. Specifically, the busbar frame 300 to which the busbar 510 and the terminal busbar 520 are mounted may be located on one side (x-axis direction) and the other side (-x-axis direction) of the battery cell stack 120, respectively. In other words, any one busbar frame 300 may be located between any one of the end plates 410 and 420 and the battery cell stack 120. In Fig. 2, the illustration of the busbar frame located on the other side (-x-axis direction) of the battery cell stack 120 is omitted.

A lead slit is formed in the busbar frame 300, and the electrode leads 111 and 112 are bent after passing through the lead slit and can be joined to the busbar 510 or the terminal busbar 520. If physical and electrical connection is possible, the joining method is not particularly limited, and weld-joining can be performed as an example.

Meanwhile, a part of the terminal busbar 520 may be exposed to the outside of the battery module 100. Specifically, a first terminal busbar opening 410H is formed in the first end plate 410 to expose a part of the terminal busbar 520. A part of the exposed terminal busbar 520 is connected to another battery module or BDU (Battery Disconnect Unit) or the like to be joined with a connection member 1400 for the formation of a high voltage (HV) connection, as shown in Fig. 1. That is, the battery module 100 may be connected to another battery module or a battery disconnect unit (BDU) through the connecting member 1400. Wherein, the HV connection is a connection that serves as a power source for supplying power, and means a connection between battery cells or a connection between battery modules.

The connection member 1400 is not particularly limited to its material as long as it can be electrically connected, and a metal material can be applied.

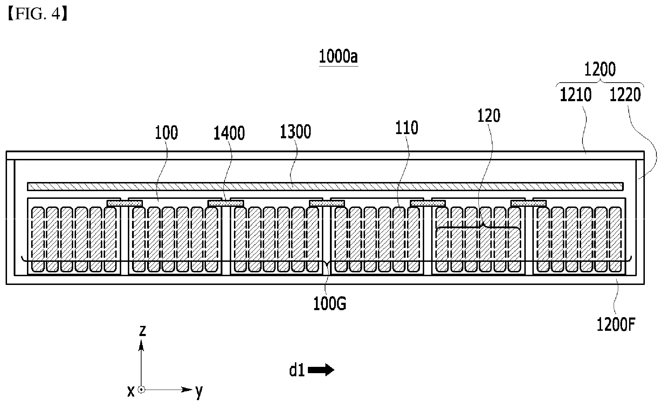

Next, the battery pack 1000a according to an embodiment of the present disclosure will be described in detail with reference to Fig. 4.

Fig. 4 is a cross-sectional view of a battery pack according to an embodiment of the present disclosure. Specifically, the state, in which the battery pack 1000a in which the battery module 100 shown in Figs. 1 and 2 is housed in the pack frame 1200 is cut in the yz plane, is illustrated.

Referring to Figs. 2 to 4, a battery pack 1000a according to an embodiment of the present disclosure includes battery modules 100 including a plurality of battery cells 110 and a pack frame 1200 for housing the battery modules 100. In the present embodiment, the battery modules 100 may be the battery modules 100 shown in Figs. 1 and 2. In Fig. 4, the battery cells 110 included in the battery modules 100 are schematically shown by dotted lines for convenience of explanation. Further, the battery modules 100 may be electrically connected to each other via the connection member 1400 to form an HV connection. In Fig. 4, the connection member 1400 is schematically illustrated, unlike that shown in Fig. 1.

The pack frame 1200 may include an upper frame 1210 and a lower frame 1220. The upper frame 1210 may have a plate-like shape, and the lower frame 1220 may include a bottom part 1200F on which the battery modules 100 are placed and may have a shape opened in its upper part. The upper frame 1210 is located on the opened upper part of the lower frame 1220, and the upper frame 1210 and the lower frame 1220 are joined to the corresponding corners to complete the pack frame 1200. The space between the upper frame 1210 and the lower frame 1220 is a space in which the battery modules 100 are housed. However, the above structure is an exemplary structure of the pack frame 1200 according to the present embodiment, and it goes without saying that a modified shape is possible as long as the battery module 100 can be housed.

Inside the pack frame 1200, the battery modules 100 are arranged in a row along the width direction d1 to form the battery module group 100G. Further, inside the battery module 100, the battery cells 110 are stacked along the width direction d1 to form a battery cell stack. In the present specification, the width direction d1 is one of directions parallel to the ground or one surface of the bottom part 1200F of the pack frame 1200, that is, one of directions parallel to the xy plane.

More specifically, while one surface of the cell body 113 of the battery cell 110 stands upright so as to be perpendicular to one surface of the bottom part 1200F of the pack frame 1200, the battery cells 110 can be stacked along the width direction d1. That is, inside the battery module group 100Ga and 100Gb, the direction in which the battery modules 100 are arranged can coincide with the direction in which the battery cells 110 are stacked.

Meanwhile, the battery pack 1000a according to the present embodiment includes a cover member 1300. The cover member 1300 covers the entire upper surface of the battery module group 100G and is located between the upper surface of the battery module group 100G and the pack frame 1200. Specifically, the cover member 1300 may be located between the upper surface of the battery module group 100G and the upper frame 1210.

The cover member 1300 may have, for example, a plate-like shape as shown in Fig. 4. However, if the entire upper surface of the battery module group 100G is covered, the shape of the cover member 1300 is not limited. For example, a structure in which a bead is formed to secure rigidity rather than a plate-like shape is possible, and a shape in which other electronic devices are arranged is also possible.

Further, although the material of the cover member 1300 is not particularly limited, it is preferable to include a material having heat resistance because it is necessary to suppress heat propagation. The suppression of heat propagation of the cover member 1300 will be described later.

Next, the advantages of the battery pack 1000a according to the present embodiment when a thermal runaway phenomenon occurs in any one of the battery cells will be described with reference to Figs. 3 to 5.

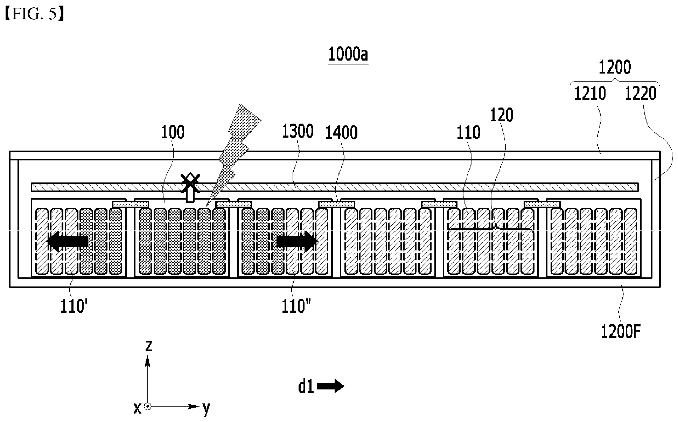

Fig. 5 is a cross-sectional view which schematically illustrates a state in which a thermal runaway phenomenon occurs in one battery cell in the battery pack of Fig. 4.

Referring to Figs. 3 to 5, a thermal runaway phenomenon may occur in any one of the battery cells 110 included in the battery pack 1000a according to the present embodiment. One example of a thermal runaway phenomenon is as follows. Physical, thermal, and electrical damage to the battery cell 110 including overcharging may occur, thereby increasing the internal pressure of the battery cell 110. When the fusion strength limit value of the cell case 114 of the battery cell 110 is exceeded, high-temperature heat, venting gas, and the like generated in the battery cell 110 may be ejected to the outside of the battery cell 110.

The thermal runaway phenomenon occurring in any one of the battery cells can be expanded to adjacent battery cells due to the convection effect, that is, effects such as conduction, convection, and radiation, and further can be expanded to adjacent battery modules. Particularly, due to the structure of the battery pack in which the battery modules are densely packed in order to increase the space utilization rate, the thermal runaway phenomenon does not propagate sequentially to the battery modules, but the thermal runaway phenomenon can occur simultaneously and frequently in multiple densely packed battery modules. That is, the thermal runaway phenomenon that starts from a battery cell and simultaneously and frequently expands to several battery modules leads to ignition and explosion of the battery pack itself, which is a serious problem.

However, in the battery pack 1000a according to the present embodiment, the battery modules 100 in the battery module group 100G are arranged in a row along the width direction d1, and the cover member 1300 for covering the entire upper surface of the battery module group 100G is located, so that the propagation of the thermal runaway phenomenon is sequentially performed not only in the unit of the battery module 100 but also in the unit of the battery cell 110. That is, as shown in Fig. 5, when a thermal runaway phenomenon occurs in any one of the battery cells inside the battery module, the venting gas and heat may be sequentially propagated to the adjacent battery cells 110. As an example, in Fig. 5, the state, in which the thermal runaway phenomenon is propagated to the battery cells 110' of the battery module located on the leftmost side and the battery cell 110" of the battery module located third from the left side, is illustrated.

Further, the venting gas and heat cannot directly propagate to non-adjacent other battery modules by the cover member 1300. In the present embodiment, a heat insulation structure has been designed so that the thermal runaway phenomenon does not propagate beyond the HV connection order of the connection member 1400 between the battery modules 100.

By designing such that sequential propagation is performed in this way, it is possible to increase the time for venting gas and heat to propagate, and in the process of sequential propagation, the intensity of thermal runaway may gradually decrease or may not be further strengthened. That is, the battery pack 1000a according to the present embodiment is designed so as to prevent the battery pack 1000a itself from leading to ignition or explosion even if a thermal runaway phenomenon occurs in any of the battery cells 110. If there is no cover member 1300 or the battery modules 100 are not arranged in a row along the width direction d1, the thermal runaway phenomenon started in any one battery cell 110 can be immediately propagated to other non-adjacent battery modules, so that a large amount of venting gas and high-temperature heat from several battery modules 100 can be discharged for a short period of time. This is highly likely to lead to ignition and explosion of the battery pack 1000a.

Meanwhile, as described above, according to the present embodiment, inside the battery module group 100G, the direction in which the battery modules 100 are arranged and the direction in which the battery cells 110 are stacked may coincide with each other. Thereby, inside the battery module 100, the propagation of the thermal runaway phenomenon between the battery cells 110 can also be sequentially performed. By allowing the arrangement direction of the battery modules 100 and the stacking direction of the battery cells 110 to coincide, an attempt was made to further delay the propagation of the thermal runaway phenomenon.

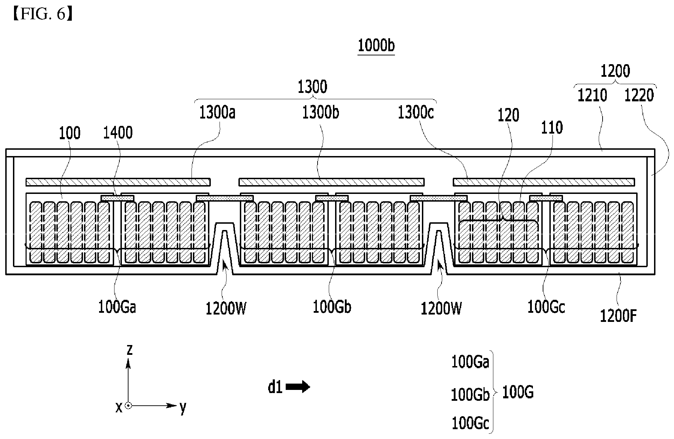

Next, the battery pack 1000b according to another embodiment of the present disclosure will be described in detail with reference to Fig. 6.

Fig. 6 is a cross-sectional view of a battery pack according to another embodiment of the present disclosure. Similar to Fig. 4, the battery pack 1000b in which the battery module 100 shown in Figs. 1 and 2 is housed in the pack frame 1200 is cut in the yz plane is illustrated.

Referring to Figs. 2, 3, and 6, the battery pack 1000b according to an embodiment of the present disclosure may include a battery module 100 including a plurality of battery cells 110 and a pack frame 1200 for housing the battery module 100. In the present embodiment, the battery modules 100 may be the battery modules 100 shown in Figs. 1 and 2. In Fig. 6, the battery cells 110 included in the battery modules 100 are schematically shown by dotted lines for convenience of explanation.

Further, the battery pack 1000b may further include a connection member 1400 for connecting adjacent battery modules among the battery modules 100. The battery modules 100 can be electrically connected to each other via a connection member 1400 to form an HV connection. In Fig. 6, the connection member 1400 is schematically shown, unlike that shown in Fig. 1.

The pack frame 1200 can include an upper frame 1210 and a lower frame 1220. Wherein, the lower frame 1220 can further include the partition wall part 1200W. The partition wall part 1200W will be described in detail again together with the first to third battery modules 100Ga, 100Gb and 100Gc.

The battery modules 100 according to the present embodiment are arranged in a row along the width direction d1 to form a battery module group 100G, and the battery module group 100G may include a first battery module group 100Ga, a second battery module group 100Gb, and a third battery module group 100Gc. The number of battery modules 100G is not particularly limited. As shown in Fig. 6, three battery module groups 100Ga, 100Gb and 100Gc or four or more battery module groups are possible, and two battery module groups are also possible.

Each of the first battery module group 100Ga, the second battery module group 100Gb, and the third battery module group 100Gc may be separated from each other along the width direction d1. That is, the first battery module group 100Ga is located separately from the second battery module group 100Gb, and the second battery module group 100Gb can be located separately from the third battery module group 100Gc.

The battery pack 1000b according to the present embodiment can include a cover member 1300, the cover member 1300 may include a first cover member 1300a, a second cover member 1300b, and a third cover member 1300c. The first cover member 1300a covers the entire upper surface of the first battery module group 100Ga, the second cover member 1300b covers the entire upper surface of the second battery module group 100Gb, and the third cover member 1300c covers the entire upper surface of the third battery module group 100Gc. More specifically, the first cover member 1300a may be located so as to correspond to the entire upper surface of the first battery module group 100Ga. The second cover member 1300b may be located so as to correspond to the entire upper surface of the second battery module group 100Gb. The third cover member 1300c may also be located so as to correspond to the entire upper surface of the third battery module group 100Gc.

Meanwhile, the above-mentioned partition wall part 1200W may be located in at least one place between the first battery module group 100Ga and the second battery module group 100Gb and between the second battery module group 100Gb and the third battery module group 100Gc. That is, the first to third battery module groups 100Ga, 100Gb and 100Gc may be spatially separated and distinguished from each other by the partition wall part 1200W.

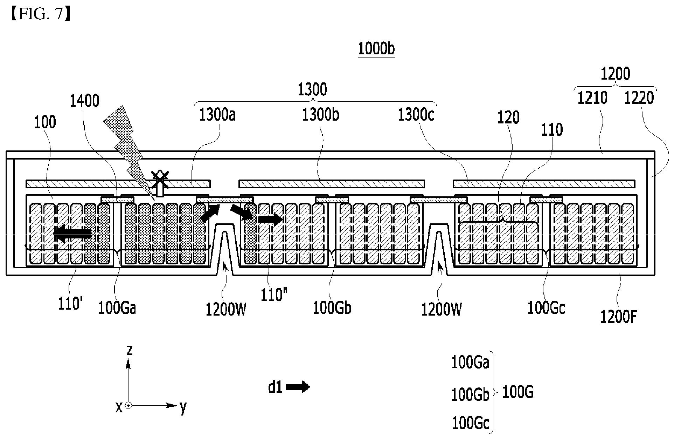

Next, the advantages of the battery pack 1000b according to the present embodiment when a thermal runaway phenomenon occurs in any one of the battery cells will be described with reference to Figs. 3, 6 and 7. Fig. 7 is a cross-sectional view which schematically illustrates a state in which a thermal runaway phenomenon occurs in any one of the battery cells in the battery pack of Fig. 6.

Referring to Figs. 3, 6 and 7, a thermal runaway phenomenon may occur in any one of the battery cells 110 included in the battery pack 1000b according to the present embodiment. In one example, the thermal runaway phenomenon may occur in one of the battery cells included in the right battery module of the first battery module group 100Ga.

The thermal runaway phenomenon occurring in any one of the battery cells can be expanded to adjacent battery cells due to the convection effect, and further can be expanded to adjacent battery modules. Particularly, due to the structure of the battery pack in which the battery modules are densely packed to increase the space utilization rate, the thermal runaway may occur simultaneously and frequently in several densely packed battery modules, rather than sequentially propagating the thermal runaway to the battery modules. That is, the thermal runaway phenomenon that starts from a battery cell and simultaneously and frequently expands to several battery modules leads to ignition and explosion of the battery pack itself, which is a serious problem.

However, in the battery pack 1000b according to the present embodiment, the battery modules 100 inside respective battery module groups 100Ga, 100Gb and 100Gc are arranged in a row along the width direction d1, and the cover members 1300a, 1300b and 1300c for covering the upper surface of each of the battery module groups 100Ga, 100Gb and 100Gc are located, so that the propagation of the thermal runaway phenomenon is sequentially performed not only in the unit of the battery module 100 but also in the unit of the battery cell 110. That is, as shown in Fig. 7, when a thermal runaway phenomenon occurs in any one of the battery cells, the venting gas, heat and the like may be sequentially propagated to adjacent battery cells 110. As an example, in Fig. 7, the state, in which the thermal runaway phenomenon is propagated to the battery cells 110' of the first battery module group 100Ga and the battery cells 110" of the second battery module group 100Gb, is illustrated.

Further, the venting gas and heat cannot be immediately propagated to a non-adjacent other battery module group by the cover members 1300a, 1300b and 1300c. In the present embodiment, the heat insulation structure has been designed so that the thermal runaway phenomenon does not propagate beyond the HV connection order of the connection member 1400 between the battery modules 100.

By designing such that sequential propagation is performed in this way, it is possible to increase the time for venting gas and heat to propagate, and in the process of sequential propagation, the intensity of thermal runaway may gradually decrease or may not be further strengthened. That is, the battery pack 1000b according to the present embodiment has been designed so as to prevent the battery pack 1000b itself from leading to ignition or explosion even if a thermal runaway phenomenon occurs in any one of the battery cells 110.

Further, as described above, inside the battery module group 100Ga, 100Gb and 100Gc, the direction in which the battery modules 100 are arranged and the direction in which the battery cells 110 are stacked may coincide with each other. Thereby, inside the battery module 100, the propagation of the thermal runaway phenomenon between the battery cells 110 can also be sequentially performed. By allowing the arrangement direction of the battery modules 100 and the stacking direction of the battery cells 110 to coincide, an attempt was made to further delay the propagation of the thermal runaway phenomenon.

In addition, the partition wall part 1200W is formed to spatially separate the battery module groups 100Ga, 100Gb and 100Gc, and the cover members 1300a, 1300b and 1300c are arranged so as to correspond to respective battery module groups 100Ga, 100Gb and 100Gc, so that the propagation of venting gas and heat is made to occur sequentially in the battery module group unit beyond the battery module unit. Further, the propagation time can be further delayed, so that the effect of reducing the intensity of thermal runaway in the propagation process can be further increased. As described above, through the structure for suppressing heat transfer, a structure with high thermal resistance can be formed, and when the thermal resistance is realized to a certain level or higher, the sequential propagation of thermal runaway can be terminated.

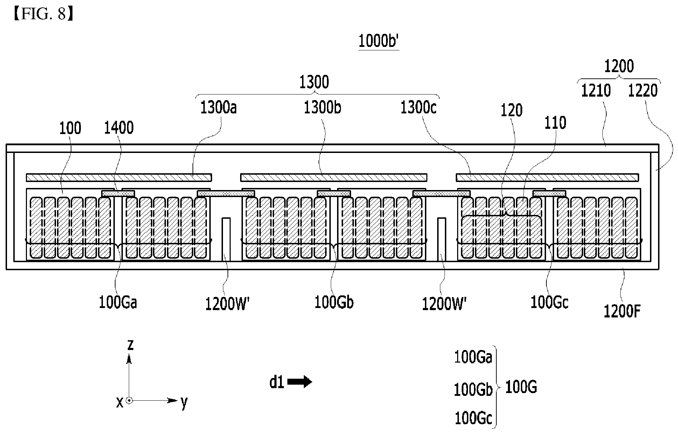

Fig. 6 illustrates the partition wall part 1200W in which a part of the lower frame 1220 is recessed, but if the battery module groups can be distinguished, the shape is not particularly limited. As another example, the shape of the partition wall part 1200W' according to a modification of the present disclosure is shown in Fig. 8. Fig. 8 is a cross-sectional view of the battery pack 1000b' including the partition wall part 1200W' according to a modification of the present disclosure.

Referring to Fig. 8, the partition wall part 1200W' according to the present embodiment is formed in at least one place between the first battery module group 100Ga and the second battery module group 100Gb, and between the second battery module group 100Gb and the third battery module group 100Gc. The partition wall part 1200W' may have a plate-like shape extending upward from the bottom part 1200F of the lower frame 1220.

Both the partition wall part 1200W shown in Fig. 6 and the partition wall part 1200W' shown in Fig. 8 have a structure that can control effects such as conduction, convection, and radiation of heat transfer, which functions to prevent the expansion of heat transfer. These partition walls 1200W and 1200W' may include a heat insulator for preventing the conduction, and may include a thin metal plate to prevent venting gas.

Although the terms representing directions such as front, rear, left, right, upper and lower directions are used in the present embodiments, it would be obvious to those skilled in the art that these merely represent for convenience of explanation, and may differ depending on a position of an object, a position of an observer, or the like.

The above-mentioned battery pack according to the present embodiment may include not only a battery module but also various control and protection systems such as BMS (battery management system), BDU(battery disconnect unit), and a cooling system.

The battery pack can be applied to various devices. Specifically, such a device can be applied to a vehicle means such as an electric bicycle, an electric vehicle, or a hybrid vehicle, or ESS (energy storage system), but the present disclosure is not limited thereto, and is applicable to various devices that can use a secondary battery.

Although preferred embodiments of the present disclosure have been described in detail above, the scope of the present disclosure is not limited thereto, and various modifications and improvements made by those skilled in the art using the basic concepts of the present disclosure, which are defined in the appended claims, also fall within the scope of the present disclosure.

### [Description of Reference Numerals]

1000a, 1000b: battery pack
100: battery module
110: battery cell
120: battery cell stack
100G: battery module group
1300: cover member

## Claims

1. A battery pack comprising:
battery modules including a plurality of battery cells; and
a pack frame for housing the battery modules,
wherein inside the pack frame, the battery modules are arranged in a row along the width direction to form a battery module group,
wherein inside the battery module, the battery cells are stacked along the width direction to form a battery cell stack, and
wherein a cover member for covering the entire upper surface of the battery module group is located between the upper surface of the battery module group and the pack frame.

2. The battery pack of claim 1, wherein:
the battery cells are stacked along the width direction while one surface of the cell body of the battery cell stands upright so as to be perpendicular to one surface of the bottom part of the pack frame.

3. The battery pack of claim 1, wherein:
the battery cell is a pouch-type battery cell.

4. The battery pack of claim 1,
the battery module group comprises a first battery module group and a second battery module group that are separated from each other along the width direction.

5. The battery pack of claim 4, wherein:
the cover member comprises a first cover member that covers the upper surface of the first battery module group and a second cover member that covers the upper surface of the second battery module group.

6. The battery pack of claim 5, wherein:
the first cover member is located so as to correspond to the entire upper surface of the first battery module group.

7. The battery pack of claim 5, wherein:
the second cover member is located so as to correspond to the entire upper surface of the second battery module group.

8. The battery pack of claim 4, wherein:
the pack frame comprises a partition wall part located between the first battery module group and the second battery module group.

9. The battery pack of claim 1,
which further comprises a connection member that connects adjacent battery modules among the battery modules.

10. A device comprising the battery pack of claim 1.
